# EUROPEAN PATENT SPECIFICATION

(11) **EP 2 980 423 B1**
(45) Date of publication and mention of the grant of the patent: **19.10.2016**
(21) Application number: 15174384.6
(22) Date of filing: 29.06.2015
(51) Int. Cl.: F16B 12/54, F16B 12/46

(54) **JOINTING DEVICE FOR CONNECTING PANELS OF FURNITURE PIECES WITH ADJUSTABLE TRACTION**
MÖBELPLATTEN VERBINDUNGSELEMENT ZUM VERBINDEN VON MÖBELPLATTEN MIT JUSTIERBARER ANTRIEBSEINHEIT
ELÉMENT DE RACCORDEMENT POUR ASSEMBLER DES PANNEAUX DES MEUBLE AVEC DE TRACTION RÉGLABLE

(30) Priority: 29.07.2014 IT PN20140038
(43) Date of publication of application: 03.02.2016
(73) Proprietor: Italiana Ferramenta S.r.l., 33070 Brugnera (PN) (IT)
(72) Inventor: Carnelos, Luca, 33080 Porcia (IT); Della Rosa, Simone, 33074 Fontanafredda (IT); Durigon, Giulio, 33078 San Vito al Tagliamento (IT); Ivan, Abramo, 33080 Porcia (IT); Verziagi, Davide, 33074 Fontanafredda (IT); Zonta, Christian, 33079 Sesto al Reghena (IT)
(74) Representative: Cercenà, Alice

(56) References cited:
- EP-A1- 2 487 373
- CH-A5- 676 026
- DE-A1- 2 600 816
- FR-A5- 2 151 231

## Description

### TECHNICAL FIELD OF INVENTION

The present invention is relative to an adjustable traction jointing device for a pair of panels of a furniture piece suitable to be abutted orthogonally against each other, in particular an elongated side member of a bed frame and the headboard and/or the footboard of the same.

### BACKGROUND OF THE INVENTION

Various jointing devices are known for connecting to each other a pair of panels of furniture pieces by abutting them at orthogonal planes on each other, used in particular for assembling a bed. Among them, a rather rudimental device comprises a traction pin associable with a first end to a housing seat provided in a first panel, forming for example the headboard or the footboard of the bed, while the opposite end of the pin is adapted to be accommodated in a second panel, forming for example the elongated side member of the bed, and in particular in correspondence of the head portion of said second panel. An example of such a prior art jointing device is disclosed in DE2600816A1.

The traction pin is provided with a through coupling hole that is internally threaded, suitable to cooperate with a fastening element, such as a screw, insertable through a maneuvering opening provided on said second panel for connecting said first and said second panel to each other. In particular, the fastening screw is provided with a countersunk head adapted to cooperate with the correspondingly countersunk edges of the maneuvering opening to exert a traction on the pin so as to pull the two panels together against each other.

This jointing device does not, however, make it possible to adjust the traction force, nor, consequently, the pulling together of the two panels. Moreover, since the countersunk head of the fastening screw cooperates directly with the material forming the second panel, which is generally a soft particleboard, eventually the coupling between the two panels could become loose.

Jointing devices of spiral type are also known, suitable to fasten to each other a first panel on which is fastened a traction pin provided with one or more shoulders and a second panel with a seat formed therein, inside of which is rotatably accommodated a traction key formed by two parallel disks spaced apart from each other by an axial pin. Each disk has on the surface facing the other disk a spiral shape suitable to cooperate with said one or more shoulders when the pin is placed between the two disks on the key. When said traction key is rotated by means of a suitable tool, a certain traction is exerted on the pin to cause a pull on the two panels. In this case, the traction force applied is continuously adjustable until the desired traction intensity is achieved.

However, such devices are rather complicated and cumbersome. In addition, they tend to loosen in time, as the contact surface of the joint is minimal and thus tends to penetrate into the material of the panel and to damage it. Moreover, when it is being tightened, the device tends to rotate inside the hole, and thus to spoil the appearance of the external surface of the panel.

### SUMMARY OF THE INVENTION

The main objective of the subject matter of the present invention is to resolve the drawbacks of the prior art by devising a jointing device for panels of furniture pieces abutting orthogonally against each other to achieve a stable, sturdy and lasting connection of said panels.

In the scope of the above objective, one purpose of the present invention is to provide a jointing device that is versatile and makes it possible to accurately adjust the intensity of the traction force between the two panels.

Another purpose of the present invention is to provide a jointing device for panels of furniture pieces that is easy to apply and intuitive to use, and that does not require particular processes to be carried out on the panels.

One not secondary purpose of the present invention is to provide a jointing device that achieves the above objective and purposes at competitive production costs, in such a way that its use is also advantageous from the economic point of view, and that can be produced with the usual known plants, machinery and equipment.

The above objective and purposes, and others that will be more evident later, are achieved by a jointing device for panels of furniture pieces as defined in claim 1.

### BRIEF DESCRIPTION OF THE FIGURES

Advantages and characteristics of the invention will be evident from the description that follows, by way of example and without limitations, with reference to the enclosed figures, in which:
- figure 1 is an exploded view of a jointing device according to the present invention;
- figures 2A and 2B illustrate, in cross section, a jointing device according to a first embodiment, in an assembling position and in a fastening position respectively, when the device is in a first operating configuration;
- figure 2C illustrates, in a cross sectional view, the jointing device according to said first embodiment in the assembling position when the device is in a second operating configuration;
- figure 2D illustrates, in a top view, two possible embodiments of a component element of the jointing device of figures 2A and 2B;
- figures 3A and 3B illustrate, in cross sectional views, a jointing device according to a second embodiment, in an assembling position and in a fastening position respectively, when the device is in a first operating configuration;
- figure 3C illustrates in a top view a component element of the jointing device of figures 3A and 3B;
- figures 4A and 4B illustrate, in cross section, a jointing device according to a third embodiment, in an assembling position and in a fastening position respectively, when the device is in a first operating configuration;
- figure 4C is a cross sectional view of the jointing device according to said third embodiment in the assembling position when the device is in a second operating configuration;
- figure 4D is a top view of a component element of the jointing device according to said third embodiment of the invention;
- figures 5A and 5B illustrate, in a cross section, a jointing device according to a fourth embodiment, in an assembling position and in a fastening position respectively, when the device is in a first operating configuration;
- figure 5C illustrates, in a top view, a component element of the jointing device of figures 5A and 5B.

### DETAILED DESCRIPTION OF THE EMBODIMENTS OF THE INVENTION

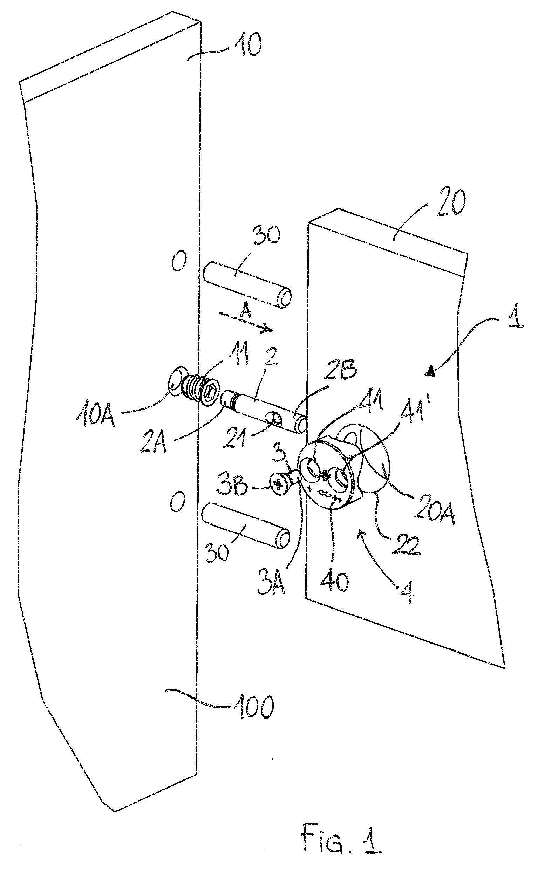

With reference to figure 1 is shown a jointing device 1 according to the present invention adapted to connect a pair of panels 10, 20 of a furniture piece, by abutting them orthogonally on each other, in particular an elongate side member of a bed structure and the headboard and/or footboard of the same. In particular, a jointing device 1 according to the present invention makes it possible to achieve an adjustable tensional coupling between said pair of panels 10, 20; in other words, the intensity of the traction force applicable between said pair of panels 10, 20 can be accurately adjusted by choosing an operating configuration of said jointing device that makes it possible to apply the desired traction force.

Said jointing device 1 comprises a traction pin 2, preferably consisting of a cylindrical body disposed along an extension axis E-E, associable with a first end 2A, advantageously externally threaded, to a first panel 10, in particular to a holding seat 10A formed on the surface 100 of said first panel 10, preferably near an edge portion of the latter. In case, to have a firmer connection, it is possible to provide an internally threaded bushing 11 inside said holding seat 10A.

Said traction pin 2 is also provided, at a second end 2B, opposite to said first end 2A, with at least one coupling hole 21, internally threaded or grooved, preferably bored through said pin, extending along a coupling axis X-X substantially perpendicular to the extension axis E-E of said traction pin 2. In some embodiments of the present invention, described later, is provided a pair of coupling holes 21, 21', each extending along a corresponding coupling axis X-X, X'-X'.

Said second end 2B of said traction pin 2 is adapted to be at least partially housed inside a corresponding housing seat 20A formed within the thickness of a second panel 20, abutting orthogonally against said first panel 10.

A fastening element 3, such as a screw comprising a threaded stem 3A, is adapted to be inserted into said housing seat 20A through a manoeuvring opening 22 communicating with it, advantageously prearranged on the surface of said second panel 20, to cooperate with said at least one coupling hole 21, 21' and achieve the connection between said first and second panel 10, 20.

Preferably, said fastening element 3 also comprises a countersunk operating head 3B, that is having a substantially truncated cone shape tapering toward the threaded stem 3A, and thus defining an inclined plane.

A pair of locating pegs 30, each extending parallel to said traction pin 2, may if necessary be provided to increase the shear resistance at the point where said panels 10, 20 abut each other.

Advantageously, said jointing device 1 further comprises an adjusting body 4, preferably cylindrical and hollow, adapted to be arranged in said manoeuvring opening 22 and provided with a base 40 formed by a flat plate having a shape essentially matching said manoeuvring opening 22 and preferably circular, on which is provided at least one centring aperture 41, for example in the form of a hole or a slot, through which said fastening element 3 can access said at least one coupling hole 21. On some embodiments of the present invention described later are provided at least one pair of centring apertures 41, 41'.

Preferably, said at least one centring aperture 41, 41' is arranged eccentrically or off-centred with respect to the centre C of said flat base 40, and is defined by a corresponding edge 41 A, 41 A' advantageously countersunk, or tapering, in use, toward the inside of the housing seat 20A and thus forming an inclined plane. Said at least one centring aperture 41, 41' is preferably configured so as to be arranged substantially facing the underlying coupling hole 21, 21', even if advantageously not perfectly centred on the same.

In use, said device 1 is mobile between a first position, or assembling position, in which the coupling between said first and second panel 10, 20 is loose, and a second position, or fastening position, in which the clearance between said panels 10, 20 is eliminated.

Advantageously, the passage from said first to said second position takes place at the same time as the threading of the stem 3A of said fastening element 3 into the corresponding coupling hole 21, 21', and it is obtained thanks to the interaction of the inclined planes formed respectively by said countersunk operating head 3B of said fastening element 3 and a contact portion 42, 42' of the countersunk edge 41 A, 41 A' of said at least one centring aperture 41, 41'.

In particular, to apply a traction on said pin 2 in the direction of the arrow A shown in figure 1, such as to pull said pair of panels 10, 20 against each other, it is necessary, in use, to have said contact portion 42, 42' of the centring aperture 41, 41' arranged between the coupling axis X-X, X'-X' of the coupling hole 21, 21' in which said fastening element 3 is inserted and the first end 2A of the pin 2 or the surface 100 of the first panel 10.

According to a characteristic peculiar to the invention, said jointing device 1 can be used selectively in at least two operating configurations, in which the intensity of the traction force applicable to said traction pin 2 in the passage from said first position to said second position is different, enabling the user to adjust/select the traction force desired between said first and said second panel 10, 20.

In general, the traction force intensity applied on the pin 2 in the direction shown by the arrow A in figure 1 to secure the fastening of said pair of panels 10, 20 to each other depends on the distance of the contact portion 42, 42' of the surface of the countersunk edge 41 A, 41 A' of the centring aperture 41, 41' from the coupling axis X-X, X'-X' of the corresponding coupling hole 21, 21'.

This concept can be implemented in various ways; below will be described by way of example some embodiments of a jointing device according to the present invention.

### DESCRIPTION OF A FIRST EMBODIMENT OF THE INVENTION

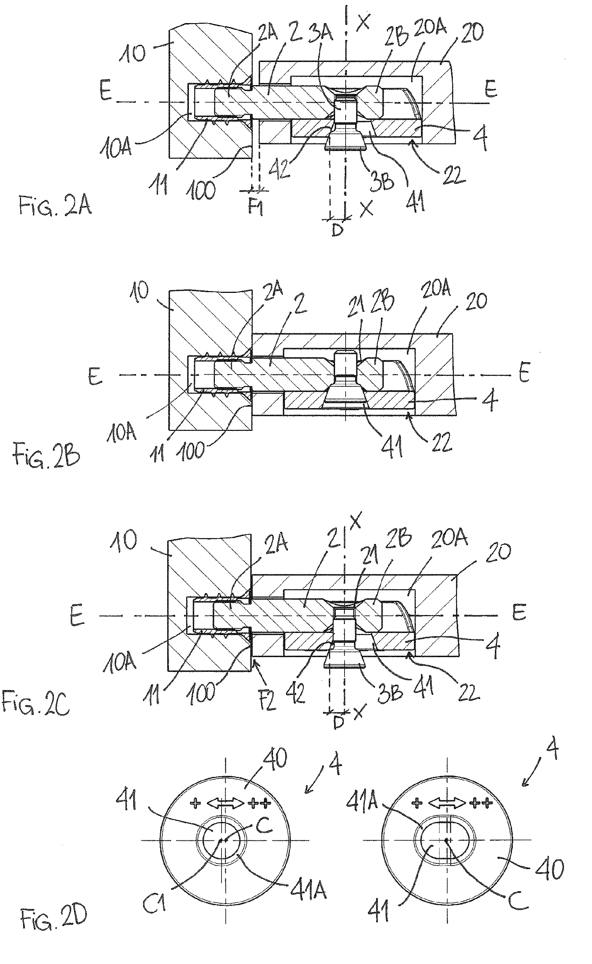

A jointing device 1 according to a first embodiment of the invention is illustrated in figures 2A - 2D. Said device 1 comprises a traction pin 2 on the second end 2B of which is obtained a single internally threaded coupling hole 21 extending along a coupling axis X-X orthogonal to the extension axis E-E of the pin 2.

Said device 1 further comprises an adjusting body 4, having a base formed by a flat plate 40 for coupling to said manoeuvrable opening 22 and comprising a single centring aperture 41, advantageously shaped as a hole or a slot, as shown in figure 2D, and defined by a countersunk edge 41 A, in particular tapering, in use, toward the inside of the housing seat 20A.

In particular, if said centring aperture 41 is formed as a hole, it is arranged off-centred with respect to said flat base 40, that is, the geometrical centre C1 of said centring aperture 41 does not coincide with the geometrical centre C of said flat plate 40; similarly, if the centring aperture 41 is shaped like a slot, it is arranged off-centred with respect to the geometrical centre C of the flat base 40 (figure 2D).

In use, said device 1 is mobile between a first position, or assembling position, in which the coupling between said first and said second panel 10, 20 is loose (figures 2A, 2C in the two different operating configurations), and a second position, or fastening position, in which the play between said panels 10, 20 is eliminated (figure 2B).

In this first embodiment, the two different operating configurations, suitable to exert two different traction force intensity values to said pin 2, can be obtained thanks to the different positioning of said adjusting body 4 inside said manoeuvring opening 22. In particular, the switch from a first configuration to a second configuration can be achieved thanks, advantageously, to a 180° rotation of said adjusting body 4 around an axis that is perpendicular to said flat base 40 and passes through its geometrical centre C.

In fact, thanks to the eccentric/off-centre arrangement of said centring aperture 41, said adjusting body 4 can be positioned in the manoeuvring opening 22, in the instant preceding the insertion of the fastening element 3, selectively according to a first operating configuration, in which the distance D between the contact portion 42 of the surface of said countersunk edge 41 A and the axis X-X of the coupling hole 21 assumes a first value D1, and in a second operating configuration in which the distance D between the contact portion 42 of the surface of said countersunk edge 41 A and the axis X-X of the coupling hole 21 assumes a second value D2, different from the D1 value.

In the instant preceding the insertion of the fastening element 3, the smaller the distance D of the contact portion 42 of said centring aperture 41 with respect to the axis X-X of said coupling hole 21, the greater will be as a consequence the traction applicable to the pin 2 and therefore the "pulling" of said pair of panels 10, 20 against each other.

As soon as the stem 3A of the fastening element 3 is inserted into the centring aperture 41, the distance D between the contact portion 42 and the axis X-X of the coupling hole 21 becomes substantially equal, independently of the operating configuration chosen; at this point, what varies is the initial distance F1, F2 between the head of said second panel 20 and the surface 100 of said first panel 10, as can be appreciated in figures 2A and 2C showing respectively the jointing device 1 respectively in the first operating configuration and in the second operating configuration.

Advantageously, on the surface of said flat plate 40 can be stamped appropriate markings to enable the user to determine the most suitable operating configuration of the adjusting body 4 for the specific situation.

### DESCRIPTION OF A SECOND EMBODIMENT OF THE INVENTION

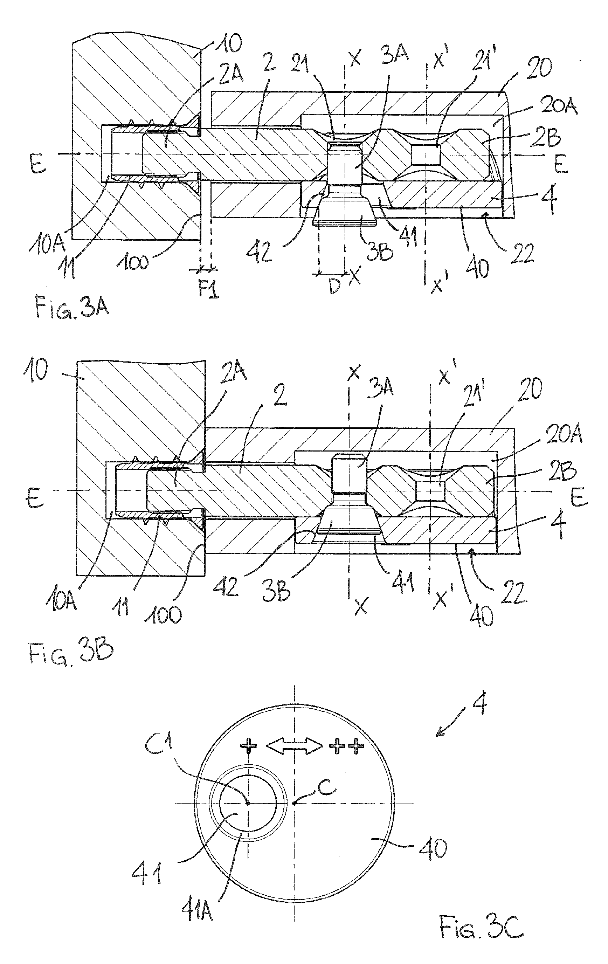

A jointing device 1 according to a second embodiment of the invention is illustrated in figures 3A, 3B and 3C; it comprises a traction pin 2 on the second end of which 2B are formed a first and a second internally threaded through coupling hole 21, 21', each extending along a corresponding first and second coupling axis X-X, X'-X' parallel to each other and orthogonal to the extension axis E-E of said pin 2.

Said jointing device 1 further comprises an adjusting body 4, on whose base formed by a flat plate 40, adapted to be arranged in correspondence of said manoeuvring opening 22, is present a single centring aperture 41, preferably shaped like a hole and defined by a corresponding countersunk edge 41 A. Said centring aperture 41 is eccentric, that is, its geometrical centre C1 does not coincide with the geometrical centre C of said flat plate 40, as can be seen in figure 3C.

In use, said device 1 is mobile between a first position, or assembling position, in which the coupling between said first and said second panel 10, 20 is loose (figure 3A), and a second position, or fastening position, in which the clearance between said panels 10, 20 is eliminated (figure 3B).

In this embodiment too, the different positioning of said adjusting body 4 within said manoeuvring opening 22 makes it possible to obtain two operating configurations,, defining respective and different traction force intensity values on said pin 2. In particular, the switch from said first operating configuration to said second operating configuration can be achieved, advantageously, through a 180° rotation of said adjusting body 4 around an axis perpendicular to said flat base 40 and passing through its centre C.

In fact, said adjusting body 4 can be arranged in said manoeuvring opening 22 according to a first operating configuration (figure 3A and 3B) in which said centring aperture 41 is substantially facing said first coupling hole 21, so as to allow the insertion of said fastening element 3 inside the latter, and in which, in the instant preceding the insertion of the fastening element 3, the distance D between the contact portion 42 of the surface of said countersunk edge 41 A and said first extension axis X-X of said first coupling hole 21 assumes a first value D1, or in a second operating configuration (not shown in the figures) in which said centring aperture 41 is substantially facing said second coupling hole 21', so as to allow the insertion of said fastening element 3 inside the latter, and in which, in the instant preceding the insertion of the fastening element 3, the distance D between the contact portion 42 of the surface of said countersunk edge 41A and said second extension axis X'-X' of said second coupling hole 21' assumes a second value D2, different from D1.

In the instant preceding the insertion of the fastening element 3, the lesser the distance D of the contact portion 42 of said centring aperture 41 with respect to the axis X-X of said coupling hole 21, the greater will be, consequently, the traction applicable to the pin 2 and therefore the "pulling" of said pair of panels 10, 20 against each other.

Consequently, the intensity of the traction applied to said pin 2 and therefore the pulling between said pair of panels 10, 20, is different on the basis of the configuration of the adjusting body 4.

As soon as the stem 3A of the fastening element 3 is inserted into the centring aperture 41, the distance D between the contact portion 42 and the corresponding axis X-X, X'-X' of the respective coupling hole 21, 21' becomes substantially equal, independently of the operating configuration chosen; at this point, what varies is the initial distance F1, F2 between the head of said second panel 20 and the surface 100 of said first panel 10.

Advantageously, on the surface of said flat plate 40 can be provided appropriate markings to enable the user to determine the most suitable operating configuration of the adjusting body 4 for the specific situation.

### DESCRIPTION OF A THIRD EMBODIMENT OF THE INVENTION

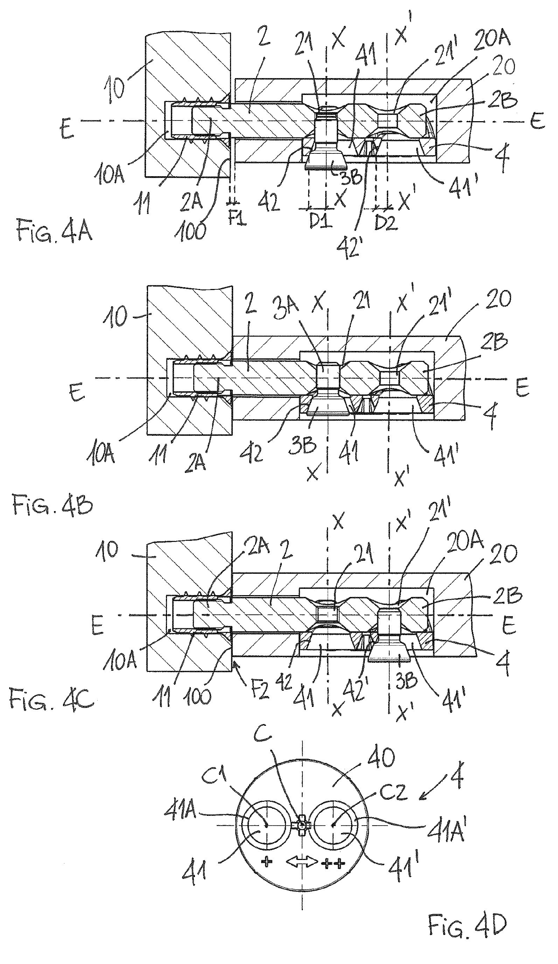

A jointing device 1 according to a third embodiment of the invention is illustrated in figures 4A - 4D; it comprises a traction pin 2, on whose second end 2B are provided a first and a second internally threaded through coupling hole 21, 21' extending respectively along a first and a second coupling axis X-X, X'-X' parallel to each other and orthogonal to said extension axis E-E and said pin 2.

Said jointing device further comprises an adjusting body 4, preferably cylindrical, whose base is formed by a flat plate 40, of circular shape, on which are provided a first and a second centring aperture 41, 41', each preferably shaped as a hole defined by a respective countersunk edge 41 A, 41 A', and both arranged eccentrically with respect to the centre C of the flat base 40, as shown in figure 4D.

In particular, the geometrical centres C1 and C2 of said centring apertures 41, 41' are positioned at different distances with respect to the geometrical centre C of said flat base 40.

Said adjusting body 4 is arranged in the manoeuvring opening 22 so that said first centring aperture 41 substantially faces said first coupling hole 21, the distance between the contact portion 42 of the first countersunk edge 41 and said first axis X-X assuming a first value D1, and said second centring aperture 41' substantially faces said second coupling hole 21', the distance between the contact portion 42' of said second countersunk edge 41' and said second axis X'-X' assuming a second value D2, different from D1.

In use, said device 1 is mobile between a first position, or assembling position, in which the coupling between said first and said second panel 10, 20 is loose (figures 4A, 4C in the two different operating configurations), and a second position, or fastening position, in which the clearance between said panels 10, 20 is eliminated (figure 4B).

In this third embodiment of the invention, the two different operating configurations are obtained by inserting said fastening element 3 alternatively inside said first coupling hole 21, so that the operating head 3B cooperates with the contact portion 42 of the edge 41 A of said first centring aperture 41 (figure 4A and 4B), or inside said second coupling hole 21', so that the operating head 3B cooperates with the contact portion 42' of the edge 41 A' of said second centring aperture 41' (figure 4C), selecting in this manner the traction intensity to apply to the pin 2 and consequently the fastening degree between said panels 10, 20.

Advantageously, on the surface of said flat base 40 can be provided suitable markings to enable the user to determine which centring aperture 41, 41' makes it possible to have the most appropriate pulling force.

### DESCRIPTION OF A FOURTH EMBODIMENT OF THE INVENTION

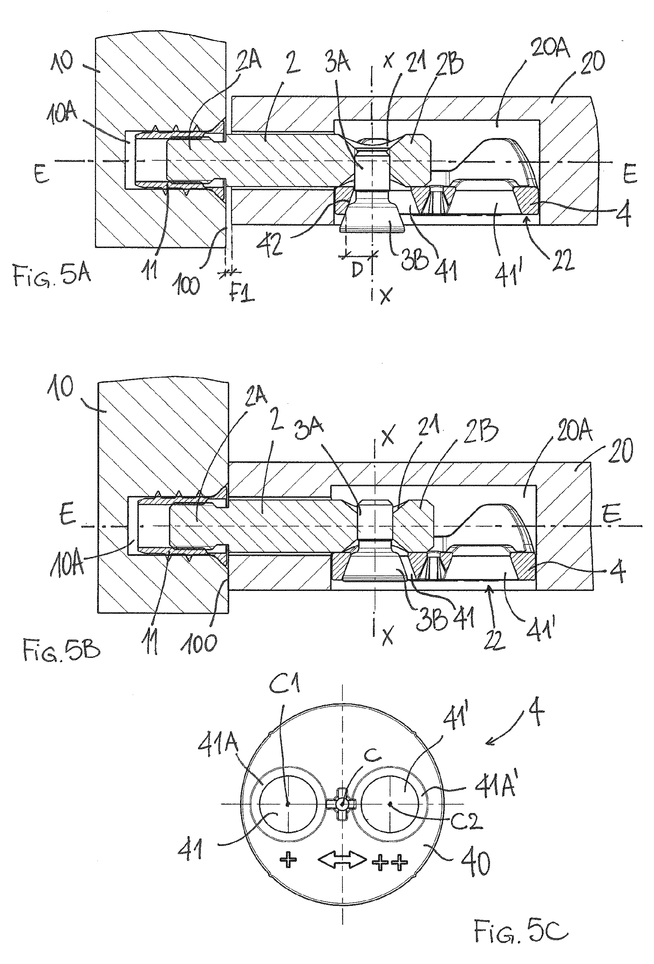

A jointing device 1 according to a fourth embodiment of the invention is illustrated in figures 5A, 5B and 5C; it comprises a traction pin 2 at whose second end 2B is provided a single internally threaded through hole 21 extending along a coupling axis X-X orthogonal to the extension axis E-E of said pin 2.

The device 1 further comprises an adjusting body 4, of substantially cylindrical shape, having a base formed by a flat plate 40 comprising a first and a second centring aperture 41, 41', preferably shaped like holes, and formed as described for the third embodiment (figure 5C).

In use, said device 1 is mobile between a first position, or assembling position, in which the coupling between said first and said second panel 10, 20 is loose (figure 5A), and a second position, or fastening position, in which the clearance between said panels 10, 20 is eliminated (figure 5B).

Advantageously, thanks to the particular arrangement of said coupling holes 41, 41', the different positioning of said adjusting body 4 inside said manoeuvring opening 22 makes it possible to obtain two operating configurations, defining two different traction intensity values on said pin 2.

In fact, said adjusting body 4 can be arranged in said manoeuvring opening 22 according to a first operating configuration (figures 5A, 5B), in which said first centring aperture 41 substantially faces said coupling hole 21 and in which, in the instant preceding the insertion of the fastening element 3, the distance between the contact portion 42 of said first centring aperture 41 and the axis X-X of said first coupling hole 21 assumes a first value D1, or in a second operating configuration (not shown in the figures) in which said second centring aperture 41' substantially faces said coupling hole 21 and in which, in the instant preceding the insertion of the fastening element 3, the distance between the contact portion 42' of said second centring aperture 41' and the axis X-X of said first coupling hole 21 assumes a second value D2, different from D1.

In the instant preceding the insertion of the fastening element 3, the smaller the distance D of the contact portion 42, 42' of the centring aperture 41, 41' from the axis X-X of said coupling hole 21, the greater will be as a consequence the traction applicable to the pin 2 and therefore the "pulling" of said pair of panels 10, 20 against each other.

As soon as the stem 3A of the fastening element 3 is inserted into the centring aperture 41, the distance D between the contact portion 42, 42' and the axis X-X of the coupling hole 21 assumes a substantially equal value, independently of the operating configuration chosen; at this point, what varies is the initial distance F1, F2 between the head of said second panel 20 and the surface 100 of said first panel 10.

The switch from said first to said second operating configuration is achieved through a rotation of said adjusting body 4 about an axis perpendicular to said flat base 40 and passing through its centre C. In the case in which said openings are aligned with respect to the geometrical centre C of said flat base 40, the switch between the two configurations described above can be obtained with a 180° rotation; otherwise, in the case in which said centring apertures are not aligned, the rotation will be less than a 180° angle.

Advantageously, at least in this embodiment, said adjusting body 4 can be provided with more than two centring openings, which thus make more than two operating configurations possible, based on the intensity of the traction to apply on said traction pin 2 and thus on the fastening force between said first and said second panel 10, 20, in which the switch between the various operating configurations is achieved through rotations smaller than 180° of said adjusting body 4.

In conclusion, from the above it appears evident how a jointing device according to any of the embodiments described for the present invention achieve the initially foreseen purposes and advantages. A sturdy and durable jointing device has in fact been conceived for abutting orthogonally panels of furniture pieces without damaging the material of the panels being joined.

Further, a jointing device according to the present invention is versatile, as it makes it possible to accurately adjust the intensity of the traction force between the two panels by means of one or more operating configurations, thanks to which the user can select or vary the fastening between the two panels as required.

Finally, as will be evident to a person skilled in the field, the jointing device according to the present invention is rather simple to apply and intuitive to use, and does not require particular processes to be carried out on the panels.

Naturally, the present invention is amenable to many applications, modifications or variants without thereby departing from the scope of patent protection, as defined by the enclosed claims. Further, the materials and equipment used to implement the present invention, as well as the shapes and dimensions of the individual components, may be the most suitable to meet the specific requirements.

## Claims

1. Jointing device (1) for connecting of a pair of panels of a piece of furniture abutting orthogonally against each other, said device (1) comprising:
- a traction pin (2) extending along an extension axis (E-E), adapted to be associated with a first end (2A) to a first panel (10) and with a second end (2B) being accommodated in a housing seat (20A) obtained within the thickness of a second panel (20), said traction pin (2) being provided in correspondence of said second end (2B) with at least one internally threaded coupling hole (21, 21') extending along a corresponding coupling axis orthogonal to said extension axis (E-E),
- a fastening element (3) comprising a threaded stem (3A) and an operating countersunk head (3B), said threaded stem (3A) being insertable within said at least one coupling hole (21, 21') through a maneuvering opening (22) provided on said second panel (20) for connecting said first and second panel (10, 20),
**characterized in that** it further comprises an adjusting body (4) adapted to be arranged in correspondence of said maneuvering opening (22) and comprising a flat base (40) whereon at least one centering aperture (41, 41') for inserting said fastening element (3) is obtained, said at least one centering aperture (41, 41') being defined by a corresponding countersunk edge (41 A, 41 A') adapted to cooperate through a contact portion (42, 42') with said operating head (3B) for applying a traction force along said extension axis (E-E) so as to eliminate the clearance between said first and said second panel (10, 20).

2. Jointing device (1) according to claim 1, selectively operable in at least a first operating configuration and a second operating configuration, wherein the traction force intensity on said traction pin (2) has corresponding and different values, so as to select the desired fastening degree between said first and said second panel (10, 20).

3. Jointing device (1) according to claim 2, wherein said at least one centering aperture (41, 41') comprises a hole or a slot arranged eccentrically with respect to the center (C) of said flat base (40).

4. Jointing device (1) according to claim 2 or 3, wherein said traction pin (2) comprises a single coupling hole (21) and said adjusting body (4) comprises a single centering aperture (41).

5. Jointing device (1) according to claim 2 or 3, wherein said traction pin (2) comprises a first and a second coupling holes (21, 21') and said adjusting body (4) comprises a single centering aperture (41).

6. Jointing device (1) according to claim 2 or 3, wherein said traction pin (2) comprises a single coupling hole (21) and said adjusting body (4) comprises a first and a second centering apertures (41, 41').

7. Jointing device (1) according to claims 4 to 6, wherein the passage between said first operating configuration and said second operating configuration is performed through a rotation of said adjusting body (4).

8. Jointing device (1) according to claim 2 or 3, wherein said traction pin (2) comprises a first coupling hole (21) and a second coupling hole (21'), and said adjusting body (4) comprises a first and a second centering apertures (41, 41'), said adjustment body (4) being configured such that, in use, said first centering aperture (41) is arranged substantially facing said first coupling hole (21) and said second centering aperture (41') is arranged substantially facing said second coupling hole (21').

9. Jointing device (1) according to claim 8, wherein said first operating configuration and said second operating configuration are obtained by selectively inserting said fastening element (3) within said first coupling hole (21), so that said operating head (3B) cooperates with said contact portion (42) of the edge (41 A) of said first centering aperture (41), or within said second coupling hole (21') so that the operating head (3B) cooperates with said contact portion (42') of the edge (41 A') of said second centering aperture (41').

10. Piece of furniture such as a bed structure comprising at least one elongated side member, a headboard and/or a footboard, further comprising at least one jointing device (1) according to any one of the preceding claims for connecting said at least one elongated side member with said headboard or said footboard.

## Patentansprüche

1. Verbindungsvorrichtung (1) zum Verbinden eines Paars Platten eines Möbelstücks, die rechtwinklig aneinanderstoßen, wobei die Vorrichtung (1) umfasst:
einen Zugbolzen (2), der sich entlang einer Erstreckungs-Achse (E-E) erstreckt und so eingerichtet ist, dass er mit einem ersten Ende (2A) mit einer ersten Platte (10) verbunden wird und mit einem zweiten Ende (2B) in einer Aufnahme (20A) aufgenommen wird, die in der Dicke der zweiten Platte (20) ausgebildet ist, wobei der Zugbolzen (2) an dem zweiten Ende (2B) mit wenigstens einem mit Innengewinde versehenen Kopplungs-Loch (21, 21') versehen ist, das entlang einer entsprechenden Kopplungs-Achse im rechten Winkel zu der Erstreckungs-Achse (E-E) verläuft,
ein Befestigungselement (3), das einen mit Gewinde versehenen Schaft (3A) und einen Betätigungs-Senkkopf (3B) umfasst, wobei der mit Gewinde versehene Schaft (3A) in das wenigstens eine Kopplungs-Loch (21, 21') über eine Einführ-Öffnung (22) eingeführt werden kann, die an der zweiten Platte (20) vorhanden ist, um die erste und die zweite Platte (10, 20) zu verbinden,
**dadurch gekennzeichnet, dass** sie des Weiteren einen Einstell-Körper (4) umfasst, der so eingerichtet ist, dass er an der Einführ-Öffnung (22) angeordnet wird, und dass er einen flachen Sockel (40) umfasst, an dem wenigstens eine Zentrier-Öffnung (41, 41') zum Einführen des Befestigungselementes (3) ausgebildet ist, wobei die wenigstens eine Zentrier-Öffnung (41, 41') durch eine entsprechende Senkkante (41 A, 41 A') gebildet wird, die so eingerichtet ist, dass sie über einen Kontaktabschnitt (42, 42') mit dem Betätigungskopf (3B) zusammenwirkt, um eine Zugkraft entlang der Erstreckungs-Achse (E-E) auszuüben und so den Zwischenraum zwischen der ersten und der zweiten Platte (10, 20) aufzuheben.

2. Verbindungsvorrichtung (1) nach Anspruch 1, die selektiv in wenigstens einem ersten Betätigungsmodus und einem zweiten Betätigungsmodus betätigt werden kann, wobei die Stärke der Zugkraft an dem Zugbolzen (2) entsprechende unterschiedliche Werte hat, um den gewünschten Grad des Anziehens der ersten und der zweiten Platte (10, 20) aneinander auszuwählen.

3. Verbindungsvorrichtung (1) nach Anspruch 2, wobei die wenigstens eine Zentrier-Öffnung (41, 41') ein Loch oder einen Schlitz umfasst, das/der exzentrisch in Bezug auf die Mitte (C) des flachen Sockels (40) angeordnet ist.

4. Verbindungsvorrichtung (1) nach Anspruch 2 oder 3, wobei der Zugbolzen (2) ein einzelnes Kopplungs-Loch (21) umfasst, und der Einstell-Körper (4) eine einzelne Zentrier-Öffnung (41) umfasst.

5. Verbindungsvorrichtung (1) nach Anspruch 2 oder 3, wobei der Zugbolzen (2) ein erstes und ein zweites Kopplungs-Loch (21, 21') umfasst, und der Einstell-Körper (4) eine einzelne Zentrier-Öffnung (41) umfasst.

6. Verbindungsvorrichtung (1) nach Anspruch 2 oder 3, wobei der Zugbolzen (2) ein einzelnes Kopplungs-Loch (21) umfasst, und der Einstell-Körper (4) eine erste und eine zweite Zentrier-Öffnung (41, 41') umfasst.

7. Verbindungsvorrichtung (1) nach den Ansprüchen 4 bis 6, wobei der Übergang zwischen dem ersten Betätigungsmodus und dem zweiten Betätigungsmodus über eine Drehung des Einstell-Körpers (4) durchgeführt wird.

8. Verbindungsvorrichtung (1) nach Anspruch 2 oder 3, wobei der Zugbolzen (2)) ein erstes Kopplungs-Loch (21) und ein zweites Kopplungs-Loch (21') umfasst, und der Einstell-Körper (4) eine erste und eine zweite Zentrier-Öffnung (41, 41') umfasst, der Einstell-Körper (4) so ausgeführt ist, dass die erste Zentrier-Öffnung (41) in Funktion im Wesentlichen dem ersten Kopplungs-Loch (21) zugewandt angeordnet ist und die zweite Zentrier-Öffnung (41') im Wesentlichen dem zweiten Kopplungs-Loch (21') zugewandt angeordnet ist.

9. Verbindungsvorrichtung (1) nach Anspruch 8, wobei der erste Betätigungsmodus und der zweite Betätigungsmodus hergestellt werden, indem das Befestigungselement (3) selektiv so in das erste Kopplungs-Loch (21) eingeführt wird, dass der Betätigungskopf (3B) mit dem Kontaktabschnitt (42) der Kante (41 A) der ersten Zentrier-Öffnung (41) zusammenwirkt, oder so in das zweite Kopplungs-Loch (21') eingeführt wird, dass der Betätigungskopf (3B) mit dem Kontaktabschnitt (42') der Kante (41 A') der zweiten Zentrier-Öffnung (41') zusammenwirkt.

10. Möbelstück, wie beispielsweise eine Bettkonstruktion, die wenigstens ein längliches Seitenelement, ein Kopfbrett und/oder ein Fußbrett umfasst und des Weiteren wenigstens eine Verbindungsvorrichtung (1) nach einem der vorübergehenden Ansprüche zum Verbinden des wenigstens einen länglichen Seitenelementes mit dem Kopfbrett oder dem Fußbrett umfasst.

## Revendications

1. Dispositif (1) de raccordement pour assembler une paire de panneaux d'un meuble en butée perpendiculairement l'un contre l'autre, ledit dispositif (1) comprenant:
- une tige de traction (2) s'étendant le long d'un axe d'extension (E-E), adapté pour être associé à une première extrémité (2A) d'un premier panneau (10) et une seconde extrémité (2B) étant logée dans un siège de logement (20A) obtenu dans l'épaisseur d'un second panneau (20), ladite tige de traction (2) étant prévue en correspondance avec ladite seconde extrémité (2B) comportant au moins un trou d'accouplement (21, 21') fileté intérieurement s'étendant le long d'un axe d'accouplement correspondant perpendiculaire audit axe d'extension (E-E),
- un élément de fixation (3) comprenant une tige filetée (3A) et une tête d'actionnement (3B) fraisée, ladite tige filetée (3A) pouvant être insérée à l'intérieur dudit au moins un trou d'accouplement (21, 21') par l'intermédiaire d'une d'ouverture de manoeuvre (22) prévue sur ledit deuxième panneau (20) pour relier lesdits premier et second panneaux (10, 20), **caractérisé en ce qu'**il comprend en outre un organe de réglage (4) apte à être disposé en correspondance avec ladite ouverture de manoeuvre (22) et comprenant une fond plat (40) sur lequel est obtenue au moins une ouverture de centrage (41, 41') pour insérer ledit élément de fixation (3), ladite au moins une ouverture de centrage (41, 41') étant définie par un bord (41A , 41A') fraisé correspondant apte à coopérer par l'intermédiaire d'une partie de contact (42, 42') avec ladite tête d'actionnement (3B) pour appliquer une force de traction le long dudit axe d'extension (E-E) de manière à éliminer le jeu entre lesdits premier et deuxième panneaux (10, 20).

2. Dispositif (1) de raccordement selon la revendication 1, pouvant être actionné sélectivement dans au moins une première configuration de fonctionnement et une deuxième configuration de fonctionnement, dans lequel l'intensité de la force de traction sur ladite tige de traction (2) présente des valeurs correspondantes et différentes, de manière à sélectionner le degré de fixation souhaitée entre lesdits premier et deuxième panneaux (10, 20).

3. Dispositif (1) de raccordement selon la revendication 2, dans lequel au moins une ouverture de centrage (41, 41') comprend un trou ou une fente disposés de manière excentrée par rapport au centre (C) dudit fond plat (40).

4. Dispositif (1) de raccordement selon la revendication 2 ou 3, dans lequel ladite tige de traction (2) comprend un unique trou d'accouplement (21) et ledit organe de réglage (4) comporte une unique ouverture de centrage (41).

5. Dispositif (1) de raccordement selon la revendication 2 ou 3, dans lequel ladite tige de traction (2) comprend un premier et un deuxième trous d'accouplement (21, 21') et ledit organe de réglage (4) comprend une unique ouverture de centrage (41).

6. Dispositif (1) de raccordement selon la revendication 2 ou 3, dans lequel ladite tige de traction (2) comprend un unique trou d'accouplement (21) et ledit organe de réglage (4) comprend une première et un deuxième ouvertures de centrage (41, 41').

7. Dispositif (1) de raccordement selon les revendications 4 à 6, dans lequel le passage entre ladite première configuration de fonctionnement et ladite deuxième configuration de fonctionnement est réalisé grâce à une rotation dudit organe de réglage (4).

8. Dispositif (1) de raccordement selon la revendication 2 ou 3, dans lequel ladite tige de traction (2) comprend un premier trou d'accouplement (21) et un second trou d'accouplement (21'), et ledit organe de réglage (4) comprend une première et une deuxième ouvertures de centrage (41, 41'), ledit organe de réglage (4) étant configuré de telle sorte que, en utilisation, ladite première ouverture de centrage (41) est disposée sensiblement en face dudit premier trou d'accouplement (21) et ladite deuxième ouverture de centrage (41') est disposée sensiblement en face dudit deuxième trou d'accouplement (21').

9. Dispositif (1) de raccordement selon la revendication 8, dans lequel ladite première configuration de fonctionnement et ladite deuxième configuration de fonctionnement sont obtenues en insérant de manière sélective ledit élément de fixation (3) dans ledit premier trou d'accouplement (21), de sorte que ladite tête d'actionnement (3B) coopère avec ladite partie de contact (42) du bord (41A) de ladite première ouverture de centrage (41) ou dans ledit deuxième trou d'accouplement (21') de sorte que la tête d'actionnement (3B) coopère avec ladite partie de contact (42') du bord (41A') de ladite deuxième ouverture de centrage (41').

10. Pièce de mobilier tel qu'une structure de lit comprenant au moins un élément de côté allongé, une tête de lit et / ou un pied de lit, comprenant en outre au moins un dispositif (1) de raccordement selon l'une quelconque des revendications précédentes pour raccorder ledit au moins un élément de côté allongé avec ladite tête de lit ou ledit pied de lit.
